# EUROPEAN PATENT SPECIFICATION

(11) **EP 3 393 977 B1**
(45) Date of publication and mention of the grant of the patent: **17.02.2021**
(21) Application number: 16836055.0
(22) Date of filing: 20.12.2016
(51) Int. Cl.: C02F 1/00, B01D 35/143, E03B 7/07, G06Q 30/06, G07F 17/00

(54) **CONTROLLING AND MANAGING METHOD FOR IMPLANT SYSTEM FOR PURIFICATION OF WATER FOR ALIMENTARY USE**
STEUERUNGS- UND VERWALTUNGSVERFAHREN FÜR IMPLANTATSYSTEM ZUR REINIGUNG VON WASSER ZUR NAHRUNGSVERWENDUNG
PROCÉDÉ DE COMMANDE ET DE GESTION DESTINÉ À UN SYSTÈME D'INSTALLATION POUR LA PURIFICATION D'EAU POUR USAGE ALIMENTAIRE

(30) Priority: 21.12.2015 IT UB20159612
(43) Date of publication of application: 31.10.2018
(73) Proprietor: RG Italia Production Srl, 20121 Milano (IT)
(72) Inventor: CARRARO, Stefano, 21010 Arsago Seprio (VA) (IT)
(74) Representative: Sach, Greg Robert
(86) International application number: PCT/IB2016/057834
(87) International publication number: WO 2017/109702

(56) References cited:
- CN-A- 104 933 810
- ES-A1- 2 324 451
- US-A1- 2006 207 920
- US-A1- 2009 294 342
- US-B1- 6 468 420

## Description

### Text of the description

The present invention relates to the field of systems for the professional purification for the water, in particular for domestic use or for offices, hotels etc.

In particular the present invention relates to the field of that type of water purifiers which are placed directly at the point of delivery of the product or, in correspondence of the sink/washbasin or other chosen dispensing point.

It is now well known to most people that the quality of drinking water supplied by aqueducts, even if purified and treated appropriately, is less than optimal.

Certainly the values of the pollutants in drinking water are within the limits dictated by the law; unfortunately these limits, in recent years, have been raised several times because of increasing pollution and of the increasing need for domestic drinking water.

To ensure water free from bacteria, the aqueducts use chlorine, an excellent low cost bactericidal, as an obvious consequence, however, the water supplied from the faucets is obviously rich of the same chemical element that, even when diluted and in low amounts, it is not beneficial for the organism as shown by numerous medical studies. Some of these studies correlate the presence of chlorine in drinking water to diseases such as cancer, atherosclerosis, cholesterol, heart attack.

The harmfulness of chlorine and of heavy metals present in the water, which of course are not eliminated by chlorine, is well known to most people, which is why the majority of the population buys water in plastic or glass bottles, or for saving, employs the so-called water houses (small fountains) where water containers can be filled. Even in these cases there are, however, disadvantages: the bottled water may contain preservatives or additives to ensure a long preservation, while the water supplied by the water houses, not containing them and not being protected by an airtight container, must be consumed within a maximum of three days from the time of supply.

Also, to buy bottled water all the year round, considering for example for a family, is very onerous both from the point of view of costs and of logistics.

In any case, drinking water from a bottle does not eliminate the problem of water pollutants for domestic use, since the so-called water from the tap, is used to wash the vegetables and to cook, if not also to prepare soups, infusions, coffee, etc., then it is very likely that, in any case, these pollutants may be ingested.

Moreover, washing and cooking food with water from the tap at home, a few natural nutrients among the most valuable and indispensable commonly contained in vegetables, in fruits, in tea but also in supplements and drugs, coming in contact with water rich chlorine, can form carcinogens or lose their nutritional value.

Numerous studies have demonstrated that the same vegetables (fruit, vegetables ...) washed and cooked with water purified from chlorine, retain all their beneficial properties and that just a minimal amount of this disinfectant is sufficient to generate potential harmful chemical reactions for both the food and the organism.

It is evident as a result of this short introduction that the best solution for the health is to use plants for the purification of water for domestic use in order to have successfully purified and healthy water, freshly delivered when needed both as drinking water and for alimentary use in general.

It is known that the purifiers for domestic use available on the market are valid and reliable devices and are substantially divided into three categories namely microfiltration, ultrafiltration and using reverse osmosis systems.

The systems for the purification of domestic water by microfiltration generally consist of one or more filters with pores of size of the order of microns (10⁻⁶ meters) through which the water passes, hence the name "microfiltration".

The systems for the purification of domestic water by microfiltration generally consist of a sediment filtration system and of a silver impregnated carbon composite filtration system.

The home water sediment purification system filters generally: sand, debris, rust, algae, and various sediments.

The home water silver impregnated carbon composite purification system absorbs: chlorine, atrazine, solvents, pesticides, chlorinated composites.

The silver ions generally present in such a composite carbon filter play an important bacterium-static action, avoiding that the stagnation of water in the filters causes bacterial proliferation.

The ultrafiltration systems for the purification of domestic water generally consist of a particular filter said "ultrafiltration membrane" or "ultrafilter" whose pores have a size of the order of 0.01 microns that blocks any particle larger that of this orifice.

It is a technology that allows to eliminate harmful chemical, physical and organic substances. And it is even able to eliminate bacteria such as entero-cocci, escherichia-coli, being characterized by dimensions up to 0.02 microns.

It is a good idea when using a home water ultrafiltration purification system, to combine it with a microfiltration system: this allows better operation and longer life of the filter performance over time.

The systems for the purification of water by means of reverse osmosis generally consist of a set of microfiltration filter and of one or more special filters called "osmotic membranes" whose pores have a size less than those of ultrafiltration filters, (order of nanometer). Reverse osmosis is the most effective method of home water purification, it eliminates all the impurities even of minimal size, to the point of even eliminating the mineral salts dissolved in water which represent the smaller substances that can be found dissolved therein.

It is evident, therefore, that the use of a water purifying device for domestic use is the optimal solution to ensure the best water quality; as it is known, on the market there are a wide range of systems comprising in the majority of instances the filtration systems mentioned here. From the above, it would seem obvious that such purification devices are widely used, but it is not so; in fact only a few private users use such devices, as well as some, but not most, hotels and/or restaurants or places where customers consume water or products prepared with water for alimentary use, this is because these devices are very expensive still today.

In addition to the cost of the device itself, also the maintenance of the same must occur with regularity, especially concerning the correct maintenance of the filters. It is in fact the filters that guarantee the correct water purification therefore they must always be in the best conditions to avoid producing water of poor quality or worse, harmful to health.

The most suitable device to allow to actually dispense only the water that is used for alimentary use can be for example a type of device that provides for the installation of a second faucet next to the one usually used for the supply of non purified water, or a self-standing device body in itself similar to a beverage dispenser directly connected to the water network or to the center faucet according to requirements. In any case, for the purpose of the present invention, those purifiers which are placed in correspondence of the individual points of domestic water supply are of interest, thus not centralized systems.

The costs related to the purifier are attributable to the cost of the purifier itself (a very important cost) and to the costs of annual maintenance that implies, usually, filter replacement and maintenance in addition to a general check of the system. The maintenance of the system is the most important procedure to ensure the quality of the water supplied.

Note that the duration of each filter is usually evaluated in an approximate way by estimating an average annual or semiannual consumption, therefore, there is no way of knowing how much the filter is actually worn. This aspect has two significant disadvantages: in the event that the user consumes more purified water than expected is likely that the quality of the same is very low, if not even harmful for the health in case the filter releases harmful substances; on the other hand if the user consumes less purified water than expected in the period of consumption of the filter, it is possible that filter replacement occurs before the filter has finished its useful lifetime to the detriment of the user what that will incur prematurely into an unnecessary cost.

There are also purifiers incorporating filters wear monitoring systems that provide turning on of warning lights; in any case it remains the responsibility of the user to call or not the technical assistance for replacement, if the user does not particularly pay attention to warnings of such nature the consumption of water that is not anymore healthy could still take place. This is the case for example also of older people who may not be practical with flashing lights or warnings, or that have vision problems, and may inadvertently consume water harmful to health.

These purifiers for domestic use, therefore, do not allow any real-time assessment of their actual use. The sector of interest are in fact those "direct use" purifiers, namely those purifiers placed in the proximity of the water dispensing points for which it is possible from time to time to choose whether to use the water supplied from the water purifier or to use the non purified faucet water. This type of purifying plants therefore includes application also in the restaurant sector and/or hotel, school, etc. Essentially those purifiers which are usually quality devices and are substantially complex, once sold are at the mercy of the complete inexperienced customer management.

These purifiers for domestic use, therefore do not allow any real-time assessment of their actual use; some of these purifiers take into account the liters that have been purified for ex post evaluations and to predict how often maintenance will be needed, but all this with control merely limited to the user or the maintenance technician that may make note of this data.

Document US2009294342A1 discloses a household water purification device, comprising electrically driven water purification means, an inlet for contaminated water, which inlet is in fluid communication with the water purification means and is connected to the water supply system when the device is operational, an outlet for dispensing purified water, which outlet is in fluid communication with the water purification means, water flowing from the inlet to the outlet via the water purification means in operational conditions, wherein said device further comprises a closing unit for interrupting the flow of water, a sensor that senses the availability water supply, and control means that controls the closing unit and the water purification means. The household water purification device is an autonomous water purifier.

Document ES 2 324 451 discloses a remote control system for water purification devices that allows to control the quality of the water produced by the device. Said control is carried out remotely by means of a control center. The system comprises a microcontroller to which a solenoid valve and a flow meter are electrically associated, arranged at the filter inlet of particles, as well as a pair of dry waste concentration sensors and located at the entrance and exit of the reverse osmosis filter. The microcontroller controls the quality of the water, so that by means of a communication module, it communicates with the remote control center by means of which the device can be operated. A faucet mounted filter device includes a horizontally disposed cylindrical part for housing a replaceable filter cartridge and a horizontally disposed arm part extending radially from the cylindrical part which has a connector on its upper side for releasable connection to a downwardly discharging water faucet.

Document US 2006/207920 discloses a faucet mounted filter device includes a horizontally disposed cylindrical part for housing a replaceable filter cartridge and a horizontally disposed arm part extending radially from the cylindrical part which has a connector on its upper side for releasable connection to a downwardly discharging water faucet. A window is provided in the cylindrical part through which the water filtration capacity gallonage is visible. A built in microprocessor with a counter delivers data to a read-out at the front end of the cylindrical part which displays the gallonage of water filtered by the filter cartridge. A sensor connected to the microprocessor senses flow of filter water and installation and removal of the cartridge causes the counter to start counting and to return to zero, respectively.

Document US 6 468 420 a device for degerminating water passing through a sanitary appliance subjects water flowing through a housing and a filtering device in the housing, to radiation, thereby destroying the micro-organisms in the water and/or the filtering device. An energy supply circuit 10 for a UV lamp is controlled by an electronic control unit which receives a "switch-on" signal produced as follows: when a manually-operated valve in a fresh water supply is opened, pressure on a pressure sensor falls; a magnetic valve initially remaining closed. A corresponding electrical signal is then sent to the electronic control unit, which activates the energy supply circuit and opens the magnetic valve in a set time sequence. When the manually-operated valve is closed, the pressure on the pressure sensor rises. The corresponding electrical signal is then sent to the electronic control unit, which in turn deactivates the energy supply circuit according to certain time factors.

Document CN 104 933 810 discloses a water purifying devices, in particular to a recharge billing type water purifier. The water purifier is capable of lowering cost, small in flow control error and quite convenient to use. Thee water purifier comprises an outer shell, wherein a water purifying cavity, a water inlet pipe and a water outlet pipe are arranged inside the outer shell, the water inlet end of the water inlet pipe is communicated with a tap water pipe, the water outlet end of the water inlet pipe is communicated with the water purifying cavity, the water inlet end of the water outlet pipe is communicated with the water purifying cavity, the water outlet end of the water outlet pipe is communicated with a faucet, and a filter element is arranged in the water purifying cavity. The water purifier further comprises an IC rechargeable card, a payment device, a display, a host, a flowmeter and an electromagnetic valve. A placing groove is formed in the outer shell, and the payment device and the display are placed in the placing groove. The host is arranged inside the outer shell, the flowmeter and the electromagnetic valve are both mounted on the water inlet pipe or the water outlet pipe, and the IC rechargeable card is electrically connected with the payment device. The payment device, the display, the flowmeter and the electromagnetic valve are all electrically connected with the host.

An object of this invention is to describe a method that allows to monitor the correct use of a "direct use" purifier in order to safeguard the quality of the water supplied and with it the health of the client.

A further object of the method of control and management for direct use purifiers, as defined by the present invention, is to provide a method which ensures continuous assistance to the customer.

A further object of the method of control and management for purifiers according to the present invention is the real-time monitoring of operating parameters of the purifier (directly or indirectly).

A further object of the method described by the present invention is to ensure that purified water is actually delivered.

It is finally an object of the invention to describe a method of control and management for purifiers which allows to reduce costs for the purchase and management of the purifier itself.

Still another object of the present invention is to describe a method which indirectly allows to make accessible to a wider segment of the population the purchase or use of a purifier.

These and further objects will be achieved by the method of control and management for plant systems as described in the appended claims of purifiers for water for alimentary use in which the purifier and the control data of the purifier are remotely monitored. Said remote monitoring takes place in real time.

The purifier with which said method of control and management is adapted to interface comprises at least a counting system for liters dispensed or consumed, a control system of the life time of the filters and at least one communication system of said data with a central system.

The purifier comprises a data communication system with the outside, such as an integrated wireless communication system such as Wi-Fi or Bluetooth systems, or GSM or GPRS or UMTS or 3G or 4G, or for example, a USB port, or an ethernet port or other suitable system of communication with the outside.

In a particularly advantageous way, therefore, to be able to apply the method of control and management described by the present invention, advantageous functional modifications have been made to a known art good level purifier as the one previously described with reference to the prior art evaluation. Said purification device has been advantageously integrated with control and monitoring systems of the liters actually purified from said purification plant; in particular said plant comprises as a rule the purifier which comprises at least a filter for the purification of water and a faucet for dispensing purified water, and at least a flowmeter for counting the liters that have been sent to the purification stage.

In this case in a particularly advantageous way, said purification plant has been advantageously integrated with means which, by monitoring the number of liters sent to the purification stage, allow for example, that the plant is blocked when a pre-set number of liters filtered is reached.

The blocking of the plant takes place in a particularly advantageous way by virtue of a system which comprises at least said flowmeter, a closure solenoid valve for the water, a transducer to activate said valve, and a control unit to which the measuring data are transmitted, for example of flow, which transmits the relative commands to the plant.

Upon opening the faucet connected to the purifier and by effect of the depression created, the transducer detects a pressure variation and sends a signal to the control unit, said control unit in turn sends a signal to the solenoid valve placed in proximity of the entrance to the water network, the solenoid valve opens allowing the supply of water in the circuit leading to the purifier, the network water passes through the purifying filter and the related systems and exits purified from the output faucet from the treatment plant

On the circuit leading to the purifier there is said volumetric meter that monitors the liters delivered along the line of the plant and reports the data to the control unit. In a particularly advantageous way the controller detects the data on a display included in the purification plant. In further advantageous fashion said display mode shows the liters consumed and subtracts them from a preset total of liters available to the customer. (Hereinbelow the criterion of pre-setting of liters will be better specified).

The monitoring of dispensed liters is used for more than one purpose: a purpose, for example, is the advantageous use as a control parameter in real time to measure the actual consumption of the filter. The related data are transmitted to the system control unit which in a particularly innovative fashion in turn transmits them to a remote control center by means of the said communication interface, which can be realized with the data transmission mode as just defined.

In very advantageous way, therefore, the manufacturer can control in real time at least said consumption data (liters of purified water) to control the parameters of use of the purifying plant. By means of this control method, if the number of liters supplied reaches the wear tolerance threshold for the filter, said data will be reported in advance on the purification plant display, for example signaling that it is still possible to consume X liters before the filter is exhausted. Said data is also accessible by the producer on the remote control unit. When the final predefined wear threshold is reached, the flowmeter will send a signal to the system control unit, which will send a command to the solenoid valve that will close the network water supply to the purifying plant. In this particularly advantageous way, the user can not consume poor quality water since upon exhaustion of the filter the plant will stop operating.

It is immediately apparent how all this goes to benefit the health of the user who will always have the guarantee of consuming safely purified water of high quality.

In further advantageous manner, as mentioned, the display visualizes the amount of the liters consumed and said amount is subtracted from a preset total of liters available to the customer. This method of management and control is very innovative and beneficial as the purifying plant is not sold to the customer as a plant itself, but is provided for example as a free loan or is free or through any other formula that allows the customer to avoid paying for the purifying plant. In fact by virtue of the method of management and control innovatively described here, it is possible in a particularly advantageous way to maintain a real-time control system and its safe operation all as a guarantee of health and protection of the customer.

Moreover, thanks to said innovative method the customer purchases a certain number of liters of water that will be pre-set on the control unit of the purification plant, therefore thanks to said means of interaction between the flowmeter and the control unit, what will actually be paid for by the customer will be only liters actually purified by the plant. By virtue of the method of management and control, therefore, there will be a threefold plant control:
- quality and wear of the filters:
- actual consumption of purified liters;
- monitoring of correct plant operations in real-time or otherwise subject to alerts in the event of malfunction etc.

The method of control and management will therefore be based also upon a management system of consumption and recharges namely, at the expiration of liters available for the customer, (an early warning can be given for example 25 liters before the actual exhaustion of the available quantity) the flowmeter will send a signal to the control unit which in turn will send a closing signal to the transducer that will closure the closing valve in input to the input circuit of the network water.

In order to activate again the purified water supply, in case the system has gone into block mode due to the exhaustion of the filter due to reaching the maximum number of liters purified, the user can request a new filter to the plant producer; said filter will be sent home directly to the user and will be accompanied by a unlocking code specific of the filter itself, which will for example be typed on the system display; the filter will be equipped with a recognition system related to the code, through which the management of the system will command the system to unblock the supply of water from the purifier only if said management system recognizes said code related to the new filter. In this way it is guaranteed that the plant only restarts if the correct code has been entered and the new and correct filter corresponding to said code has been inserted. The recognition of the filter can for example be carried out by means of a chip or microchip placed on the filter for the recognition of said new filter and its proper positioning in the plant.

Note that in a particularly advantageous way the mere operation of replacement of the filter takes place in a decidedly simple fashion and within the reach of any user, which allows to save on maintenance that here does not include the expensive call for a technician (if not strictly required by the user).

In further advantageous manner the control and management method described by the present invention allows, by means of the management system, to take account of the liters still to be consumed whenever the system has gone into block mode due to the exhaustion of the filter, in this way the user can resume the supply of purified water as soon as the filter is replaced and the relative unlock code has been inputted.

Still, in further advantageous manner, when instead the count of the liters "loaded" on the plant, or the pre-paid liters, will run out, the user is notified in one or more modes such as:
- alert that a pre-alarm threshold of near exhaustion is reached;
- alert at the exhaustion of liters available for consumption;
- audible/visual alert at timed intervals to remind the need to recharge;
- possibility of receiving notification via sms on mobile phone or other electronic device via the communication interface described above;
- possibility of sending e-mail or text message or call from the producer that by virtue of the reception of remote data can provide direct advice to the user.

The method described here, therefore, in very effective manner, defines a new way of conceiving the management of purifying plants for water for alimentary use: what the user actually purchases is the actual use that is made of the plant, or the liter that actually consumed; this decidedly advantageous way, allows to reduce the costs related to the installation of purifying plants, since they will be provided in one of the modes above said, in addition to absolutely improve care and after-installation assistance of the manufacturer with regard to the requirements and to the protection of the consumer.

In an entirely advantageous fashion also, the method of control and management described by the present invention allows the use of modern technological means also for quick and effective management of said plant. In fact, to request a new recharge as already in use for example in the phone industry, but still absolutely innovative in this field of application, the user will be enough to buy an online recharge from the manufacturer, which will provide a recharging code to the user by the preferred transmission mode: for example sms, email, by phone, or even to facilitate older or less experienced users, it will be possible for the manufacturer to send an unlock code directly on the management system of the plant which, as mentioned, may be connected to the Internet network for example wirelessly, comprising all or some of the communication protocols here mentioned above.

It appears evident that said method of management and control applicable to purifying plant by virtue of the inclusion of some means such as a transducer, a closure solenoid valve and means of communication, allow to innovate in a decidedly advantageous way, with contained costs, said purifying plant and especially their management side, maintenance and control with a considerable increase in the guarantee for the customer/user. Moreover, in an entirely advantageous fashion, by applying this method resolves the problem of the cost of such treatment plants is solved which will therefore be accessible to a wide segment of the population for the benefit of health and solving the prior art problems mentioned here above.

These and other advantages obtained by virtue of the innovative method of control and management of purification plant for water for alimentary use and not, will be further clarified in the detailed description of the related figures appended hereto in which:
in Fig. 1 a possible embodiment of a purification plant suitable for the application of the method of management and control described by the present invention is shown;
in Fig. 2 it is shown, in more detail, the management action of the various steps of the method applied in this case to the embodiment of a purifying plant suitable for the purpose of example.

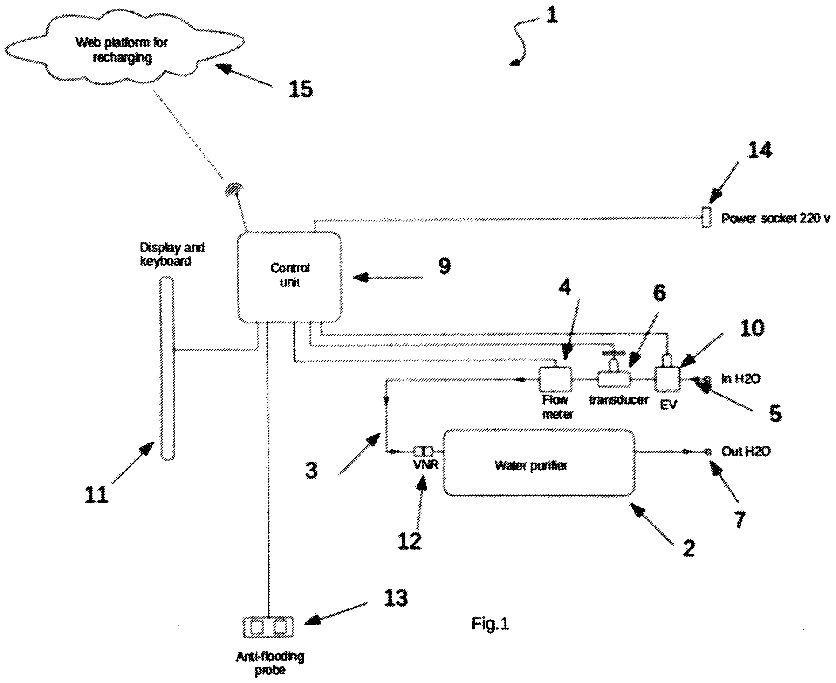

In figure 1 it is represented a purifying plant 1 for water for alimentary use in a modified embodiment for the application of the innovative control and management method described by the present invention; said plant 1 comprises at least a purifier 2, at least one of network water supply line 3 connected to said purifier 2, related to said line are present at least a flowmeter 4 for the water passing from the home network 5 to the purifier 2, at least one pressure transducer 6 which detects a pressure variation upon the opening of a faucet 7 exiting the purifier 2 for dispensing the purified water; said transducer 6 communicates with a control unit 9 that supplies the consent to the opening of a closure solenoid valve 10 placed upstream of the line 3 of network water supply to the purifier 2, at the input of the home network 5 to the line 3. Additionally said purification plant 1, comprises a display 11 connected with said electronic control unit 9 for the display of measured data of the plant and the possibility of entering the data for the plant, for example via a keyboard carried on said display 11. Said control unit 9 comprises a data management system acting through the control and management method defined by the present invention. (Among said flowmeter 4 and said purifier it is usually present a non-return valve 12 and a safety anti-flooding probe 13 in the case of plant losses and of course, a power source 14 for the plant or suitable power supply system is purpose).

In particular, in a particularly advantageous way, said control and management method comprises at least:
- control of the usage start of said purification plant by means of a signal sent from the transducer 6 to the control unit 9;
- consent to the opening of the closure solenoid valve 10 upstream of the network circuit 5 inputting to the feeding line 3 of the purifier 2;
- start of network water supply on the power line 3 and accounting for incoming liters (and therefore outcoming 9 to/from the purifier 2 by means of the flowmeter 4;
- sending data from the flowmeter 4 to the control unit 9; said method comprises in a particularly advantageous way the steps and controls of:
- pre-setting by means of the management system of the control unit of a defined number of liters;
- subtraction from the preset number of liters of the data sent by said flowmeter 4;
- visualization on the display 11 of the control unit 9 of the number of liters still available;
- controlling the consumption of the filter according to the data of purified liters in real time;
- controlling the real effectively purified water consumption in real time;

Said management and control method in a decidedly advantageous way further comprises:
- interaction with the user by means of the management system of said control unit 9;
- interaction with the Internet network 15 by means of the management system of said control unit 9 by means of said data communication system with the outside included in the plant, for example for convenience in the control unit 9 and its relative management system, such as an integrated wireless communication system such as Wi-Fi or Bluetooth, or GSM or GPRS or UMTS or 3G or 4G systems, or for example, a USB port or an ethernet port or other system suitable for communication with the outside;
- sending data to/from said communication system of said purification plant to the remote central monitoring and control of said plant 1;
- requesting recharge of liters of water according to consumption or of a new filter by specific applications such as company web site, mobile apps, or even telephone purchases;
- sending by electronic means such as e-mail, SMS, MMS, QR Code, an unlock code;
- inputting said unlocking code on the display 11 of the plant by means of a numeric keypad or suitable means in order or direct input of the code from a mobile device such as a Bluetooth interface; or sending directly from the producer to the management system of the control unit via wireless communication systems or network wiring.

It seems clear that by virtue of the innovative method of management and control described here, all the above advantages for the user are realized such as: reduced or zero costs for installation and purchase of the purification plant, real-time assistance concerning maintenance of the purifying plant 1 for the operation and the quality of water supplied from said purification plant, safety of the customer at any time of plant use. The user has a customized all-round system, since it is he himself who decides how much to spend having control at all times of the amount of liters actually used. The simplicity of recharging operations makes this operation within the reach of all users, both those more comfortable with technology than those with little experience thanks to multiple charging modes provided.

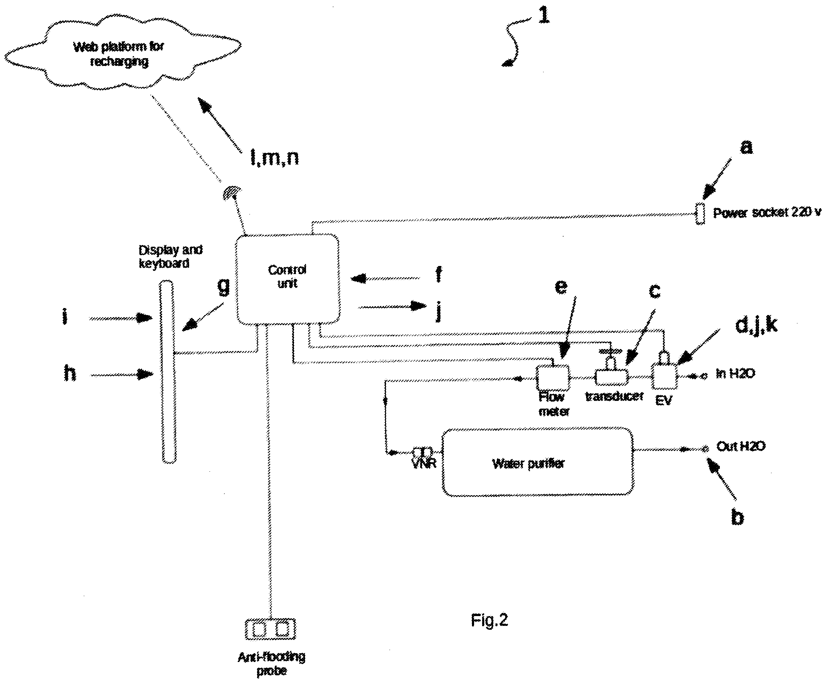

In figure 2 it is represented with more detail how said control method and management interacts with every part of the said purification plant; note that, in a particularly advantageous way, a first treatment plant of this kind is suitable for both private users or to bars, restaurants, schools, hotels etc. also thanks to said possibility of remote control of functionalities of plant 1 and the absolute guarantee of reduced costs and personalized assistance based on actual consumption of filters and plant.

In this regard, note that filtration systems suitable for the purpose may be microfiltration, ultrafiltration, reverse osmosis, or even any kind of filtration systems given that the type of filtration system does not restrict in any way the scope of the innovative method described by the present invention.

In figure 2 it is shown the same schematic plant 1 of figure 1, comprising the same parts/components.

In particular, in a particularly preferred application of the method described by the present invention, said method of management and control acts on said management system of said control unit carrying out on the various components of the purification plant, the following actions/management steps, some of which are already handled by standard management systems. In any case, here it is an example of method of management and complete control, with particular detail to the innovative management steps described by the present invention:
as regards the initialization actions:
   a. powering the control unit 9 with relative management system for plant activation;
   b. opening of the faucet 7 connected to the purifier 2
regarding the control and management actions:
   c. verifying the difference by means of the transducer 6 on the supply line 3 that goes to the purifier 2 transmission signal to the control unit;
whenever there are liters to be consumed:
   d. consent from the control unit with transmission of an opening signal to the solenoid valve 10 upstream of the feeding line 3 to allow the entrance on the water supply line network 5;
   e. counting the liters passed in the supply line 3 by the volumetric meter 4; liters N
   f. sending data from the flowmeter 4 to the control unit 9;
   g. counting of liters consumed by subtracting from the liters available X sending data to the display 11 of the plant 1; difference D=X-N
   h. visualizing on the display of 11 liters available/residual D in real time;
   i. alarm of exhaustion of residual liters at a predetermined threshold;
   j. alarm and sending a closure signal from the control unit 9 to the solenoid valve 10 when the residual liters are exhausted: D=0
   k. closing the dispensing of purified water from the plant 1;
hence the method of management and control further comprises:
   1. sending data in real time from the management system of the control unit 9 of the plant during the execution of the other steps of the method in real time or at predefined time intervals, or at the occurrence of some abnormal event to the system such as lifetime exhaustion of the filter for running out of time or of purified F or system malfunctions;
   m. management/sending/processing by one or more systems of communication with the outside of said system management data;
   n. management and processing of said data to a central control and remote monitoring by the manager/system manufacturer.

Regarding the management method of the refills for the liters of water consumed on
said plant, with reference to the above method steps shown above:
   - management of the refills of liters of purified water through a system of virtual refills such as phone recharge modes by means of sms, mms, or by means of applications for mobile phones especially set;
   - purchase by the user by means of a telephone call or online purchase on the manager's
site, by means of the common means of management and purchase on-line;
   in a particular embodiment:
   - sending to the customer a numeric or alphanumeric plant unlock code system corresponding to the number of liters purchased;
   - input by the user of the unlock code on the display 11 of the plant or by means of direct communication, for example, by means of a Bluetooth communication protocol between, for example, a mobile device and the plant management system;
in a further embodiment:
   - purchase by the user of the recharge;
   - sending an unlock code from the operator/manufacturer of the plant to the plant 1 itself by means of the said communication means such as wireless or network cabling;
still further embodiments with particular reference to the innovative method steps a to h;
   - monitoring of the purifying filter of the purifier 2 and of the consumption according to the liters purified from the plant;
   - monitoring and control by the management system of the control unit 9, for example by subtraction of the residual liters F that the filter can purify safely before exhaustion of optimal properties;
   - visualizing on the display 11 of the plant 1 of the data of filter consumption in terms of life time and consumption;
   - sending the filter consumption data to the remote management system as described in the method previously listed points:
   - repetition of the steps from i to j with regard to the consumption of the filter.

Regarding the particular importance of the management and control of the filter, which is an essential part for guaranteeing the health of the client, in a particularly advantageous way:
- implementation of the aforesaid recharging protocol applied for recharging of liters purchased with differences for:
- sending to the client's domicile the purchased filter, or sending a technician at the user's choice;
- insertion of the new filter in the purifier 2;
- recognition, for example electronic by means of a microchip, by virtue of the management system of the replaced filter which corresponds to a code or a dedicated recognition system;
- input of the unlock code and reactivation of the plant for substitution of the filter by means of use of all the variants above indicated.

In a particularly advantageous way there is for example a security system comprised in said management and control method that correlates a specific filter by means of said recognition systems, to a determined unlock code, whereby said unlock code allows to restart the plant facility only if the correct filter is inserted into the purifier, said filter will be recognized by the management of the control unit 9 of the system, allowing the reactivation of the plant. Note that the filter can be removed and reinserted in the purifier in a particularly simple manner, for example by simple insertion in a seat with or without release and/or unlockable by means of any simple and user-friendly system

In a particularly advantageous way as mentioned, the method comprises memorizing the liters still available to the user even if the plant is blocked due exhaustion of the filter and therefore upon replacement of the filter the user will still have available all the liters purchased.

Note that the means of interaction between user and management of the device, that is by means of the display or by remote transmission of codes, or for example by sending to the user an active coded tag, as it is known so as to benefit simply from a corresponding reading system for example RFID included in the plant, are just some examples of interaction with said plant; if the interaction mode is affected by changes, that would not have anything to subtract from the innovation from the advantageous method of control and management of purification plants with a management method by means of evaluating the consumable - and not of sale of the device- and further advantageous control method of the plant and of the parameters of the plant by remote, for the safety of the customer.

Each of said steps of said method of control and management for treatment plants for water for alimentary use is indicative of some forms of particularly advantageous preferred embodiments of the method described according to the present invention. Note that, by virtue of said innovative method, it is possible to achieve all the purposes described by the present invention in addition to obtaining more innovative advantages.

Therefore these are just some of the possible advantageous embodiments of the innovative method of management and control according to the present invention, whereby it is noted that: each variant of the type of the purification plant components, shape, material, method of installation of the plant, location, number of units to be managed, remote control methods by means of monitoring with communication protocols, adding of controls on the plants, which are herein described for the controls and fundamentally innovative management, can comprise any further control of malfunction or facility management, or even GPS location of the same, for possible reasons of maintenance alert or alert for the service center, or remote support to the user to allow the user to perform simple operations itself, with further economical and time savings, it is a possible embodiment included in the scope of the method of management and control described in the present invention, as better described in the appended claims.

## Claims

1. A method of control and management for a plant system (1) for the purification of water for alimentary use,
wherein said plant system (1) comprises at least:
- a water purifier (2) comprising at least a filter to purify the water, said filter having a definite life time represented by a wear tolerance threshold defined by a number of consumable liters (X) that can be purified before the filter is exhausted;
- a feeding line (3) to connect said purifier (2) to the water network (5);
- a faucet (7) connected to the purifier (2) line to dispense purified water;
- a control unit (9);
- a display (11) connected to the control unit (9);
- a solenoid valve (10) at the inlet of the feeding line (3) controlled by the control unit (9);
- a transducer (6) tor continuously monitoring a pressure variation on said feeding line (3) so as to signal the opening of the faucet (7);
- a flow meter (4) on the feeding line, located between the solenoid valve (10) and the water purifier (2), and connected to the control unit (9);
- a communication system tor communicating data from the control unit (9) to a remote control center and from the remote control center to the control unit (9);
said method comprising the steps of:
- pre-setting on the control unit (9) the number (X) to consumable liters to water that can be purified before the filter is exhausted;
- continuously monitoring a pressure variation on the feeding line (3) by means of the transducer (6), which sends a signal to the control unit (9) whenever the faucet (7) is opened;
- opening the solenoid valve (10) by means of the control unit (9) upon receiving from the transducer (6) the signal of the opening of the faucet (7), if consumable
liters are available;
- using the flowmeter (4) to count the number (N) of consumed liters of water passing through the purifier (2) and sending this data to the control unit (9);
- calculating by means of the control unit (9) the difference (D) between the pre-set number of consumable liters (X) and the number of consumed liters (N) flown through the flowmeter (4);
- sending in real time the data of the control unit (9) to a display (11) showing in real time the difference D between the pre-set number of consumable liters (X) and the number of consumed liters (N);
- upon exhaustion of the available consumable liters (X), when the difference D is equal to zero, generating an alarm and closing the solenoid valve (10) by means of the control unit (9), therefore closing the supply of water from the network to the plant system (1) so as to guarantee the optimal quality of the consumed water and thus the health and safety of the user:
wherein the method further comprises the steps of:
- transmitting in real time to the remote control center by means of the communication system the number (N) of consumed liters:
- providing remote real time assistance from the remote control center concerning maintenance of the plant system (1) so as to guarantee the optimal quality of the consumed water and thus the health and safety of the user.

2. The method of control and management for a plant system (1) for the purification of water for alimentary use according to claim 1 further comprising the steps of:
- sending from the control unit (9) to the display (11) pre-alert warnings indicating the expiration of the life time of the filter;
- sending from the control unit (9) to the display (11) pre-alert warnings indicating the expiration of the number (X) of available liters or pre-alert indicating the expiration of the number (X) of purifiable liters by the filter (F) and/or alert of the elapsing of the terms of use of the filter,
- comparison of said data; the lifetime of the filter can be exhausted but not the available liters and viceversa;
- in all cases pre-alert and alert of purifier closing upon reaching of one or more thresholds.

3. The method of control and management for a plant system (1) for the purification of water for alimentary use according to claim 1 further comprising the steps of:
- sending data from the control unit (9) for operating anomalies of the plant (1) to at least one or more external devices, namely expiration of the life time of at least one of the filters of the purifier (2) for expiration of terms and/or exhaustion of liters (F);
- management/sending/elaboration by means of one or more external communications system of the management data of the plant;
- management and elaboration of said data by means of a remote control and management unit by means of the responsible/producer of the plant.

4. The method of control and management for a plant system (1) for the purification of water for alimentary use according to claim 1 further comprising the steps of:
- managing/sending/processing of said management data by one or more communication systems with the outside of the plant (1), said communication system being an integrated Wi-Fi wireless communication system or Bluetooth, or GSM or GPRS or UMTS or 3G or 4G, or a USB port or an ethernet port or other suitable system for communication with the outside,
- remote real time assistance for plant and user safety

5. The method of control and management for a plant system (1) for the purification of water for alimentary use according to the preceding claims further comprising the steps of:
- management of consumables liters of water by means of a recharging system at least a virtual;
- management of the reloading of liters of purified water by means of a system of virtual refills such as a phone recharge mode by means of SMS, MMS, or applications for mobile phones especially configured.

6. The method of control and management for a plant system (1) for the purification of water for alimentary use according to claim 2 further comprising the steps of:
- sending to the customer a numeric or alphanumeric code to unlock the plant corresponding to the number of liters available;
- input by the user of the unlock code on the display (11) of the plant or by means of direct communication, for example, by Bluetooth communication protocol between, for example, a mobile device and the management system of the plant guaranteeing the safe use of plant.

7. The method of control and management for a plant system (1) for the purification of water for alimentary use according to the preceding claims further comprising the steps of:
- filter management and filter replacement;
- sending directly to the domicile of the user of the purchased filter, or at the user's choice, sending a technician;
- insertion of the new filter in the purifier (2);
- recognition by the control unit (9) of a new filter; said filter comprising a microchip, said control unit being adapted to recognize said microchip to which said microchip corresponds an unlocking code or a dedicated recognition system;
- inputting the unlocking code using previous modalities;
- reactivation of the plant for filter replacement.

8. The method of control and management for a plant system (1) for the purification of water for alimentary use according to the preceding claims further comprising the steps of:
- memorizing by the control unit (9) the liters still available to the user if the plant is stopped for exhaustion of the filter;
- reactivation of the plant (1) with relative residual consumables liters made again available by substituting the filter.

## Patentansprüche

1. Ein Verfahren zur Steuerung und Verwaltung eines Anlagensystems (1) zur Reinigung von Wasser für den Lebensmittelgebrauch
wobei das Anlagensystem (1) mindestens umfasst:
- einen Wasserreiniger (2), der mindestens einen Filter zum Reinigen des Wassers umfasst, wobei der Filter eine bestimmte Lebensdauer aufweist, die durch eine Verschleißtoleranzschwelle dargestellt wird, die durch eine Anzahl von verbrauchbaren Litern (X) definiert ist, die gereinigt werden können, bevor der Filter erschöpft ist;
- eine Zuleitung (3) zum Anschluss des Reinigers (2) an das Wassernetz (5);
- einen Wasserhahn (7) der an den Reiniger (2) angeschlossen ist um gereinigtes Wasser abzugeben;
- eine Steuereinheit (9);
- ein Display (11) mit der Steuereinheit verbunden (9);
- ein Magnetventil (10) am Eingang der Zuleitung (3) das von der Steuereinheit (9) gesteuert wird;
- einen Wandler (6) der kontinuierlich eine Druckänderung an der Zuleitung (3) überwacht um das Öffnen des Hahns (7) zu signalisieren;
- einen Durchflussmesser (4) in der Zuleitung, der zwischen dem Magnetventil (10) und dem Wasserreiniger (2) angeordnet ist und mit der Steuereinheit (9) verbunden ist;
- ein Kommunikationssystem zur Übermittlung von Daten von der Steuereinheit (9) zu einer Fernsteuerungszentrale und von der Fernsteuerungszentrale zu der Steuereinheit (9) ;
wobei das Verfahren die folgenden Schritte umfasst:
- Voreinstellung an der Steuereinheit (9) der Anzahl (X) von Litern von nutzbares Wasser, die gereinigt werden können, bevor der Filter erschöpft ist;
- kontinuierliche Überwachung einer Druckänderung an der Zuleitung (3) mittels des Messwandlers (6), der, der bei jedem Öffnen des Wasserhahns (7) ein Signal an der Steuereinheit (9) sendet;
- Verwenden des Durchflussmessers (4) zum Zählen der Anzahl (N) der verbrauchten Liter Wasser, die durch den Reiniger (2) fließen, und senden diese Daten an die Steuereinheit (9);
- Berechnen der Differenz (D) zwischen der voreingestellten Anzahl verbrauchbarer Liter (X) und der Anzahl verbrauchter Liter (N), die durch den Durchflussmesser (4) geflogen werden, mit Hilfe der Steuereinheit (9);
- Senden der Daten der Steuereinheit (9) in Echtzeit an eine Anzeige (11), die in Echtzeit die Differenz (D) zwischen der voreingestellten Anzahl verbrauchbarer Liter (X) und der Anzahl der verbrauchten Liter (N) anzeigt:
- bei Erschöpfung der verfügbaren verbrauchbaren Liter (X), wenn die Differenz D gleich Null ist, wird ein Alarm erzeugt und das Magnetventils (10) mittels der Steuereinheit (9) wird geschlossen, wodurch die Wasserzufuhr vom Netz zum Anlagensystem (1) gesperrt wird, um die optimale Qualität des verbrauchten Wassers und damit die Gesundheit und Sicherheit des Benutzers zu gewährleisten:
wobei das Verfahren ferner die folgenden Schritte umfasst:
- Übermittlung der Anzahl (N) der verbrauchten Liter in Echtzeit an die Fernsteuerzentrale mittels des Kommunikationssystems:
- Bereitstellung einer Echtzeit-Fernhilfe von der Fernsteuerungszentrale durch das Fernsteuerungszentrum in Bezug auf die Wartung des Anlagensystems (1), um die optimale Qualität des verbrauchten Wassers und damit die Gesundheit und Sicherheit des Benutzers zu gewährleisten.

2. Das Verfahren zur Steuerung und Verwaltung eines Anlagensystems (1) zur Aufbereitung von Wasser für Lebensmittelgebrauch nach Anspruch 1, ferner umfassend die folgenden Schritte:
- Senden von Vorwarnungen von der Steuereinheit (9) an das Display (11), die den Ablauf der Standzeit des Filters signalisieren;
- Senden von der Steuereinheit (9) an das Display (11) von Vorwarnungen, die den Ablauf der Anzahl (X) der verfügbaren Liter anzeigen, oder von Warnhinweisen, die den Ablauf der Anzahl (X) der durch den Filter (F) zu reinigenden Liter anzeigen, und/oder von Warnungen über den Ablauf der Nutzungsdauer des Filters,
- Vergleich dieser Daten; die Lebensdauer des Filters kann erschöpft sein, nicht aber die verfügbaren Liter und umgekehrt;
- in allen Fällen Voralarm und Alarm zum Schließen des Reinigers bei Erreichen eines oder mehrerer Schwellenwerte.

3. Das Verfahren zur Steuerung und Verwaltung eines Anlagensystems (1) zur Aufbereitung von Wasser zur Lebensmittelgebrauch nach Anspruch 1, das ferner die folgenden Schritte umfasst:
- Senden von Daten von der Steuereinheit (9) für Betriebsanomalien der Anlage (1) an mindestens eine oder mehrere externe Einrichtungen, nämlich Ablauf der Lebensdauer mindestens eines der Filter der Aufbereitungsanlage (2) bei Ablauf von Laufzeiten und/oder Erschöpfung von Litern (F);
- Verwaltung/ Versand/Ausarbeitung der Verwaltungsdaten der Anlage mittels eines oder mehrerer externer Kommunikationssysteme;
- Verwaltung und Ausbereitung dieser Daten mittels einer Fernsteuerung und Verwaltungseinheit durch den Verantwortlichen/Hersteller der Anlage.

4. Das Verfahren zur Kontrolle und Verwaltung eines Anlagensystems (1) zur Wasseraufbereitung für den Lebensmittelgebrauch nach Anspruch 1, ferner umfassend die folgenden Schritte:
- Verwaltung/Sendung/Verarbeitung der Verwaltungsdaten durch ein oder mehrere Kommunikationssysteme mit der Außenseite der Anlage (1), wobei das Kommunikationssystem ein integriertes drahtloses Wi-Fi-Kommunikationssystem oder Bluetooth oder GSM oder GPRS oder UMTS oder 3G oder 4G oder ein USB-Anschluss oder ein Ethernet-Anschluss oder ein anderes geeignetes System zur Kommunikation mit der Außenseite ist,
- Remote-Echtzeit-Assistenz für die Anlagen- und Benutzersicherheit.

5. Das Verfahren zur Kontrolle und Verwaltung eines Anlagensystems (1) zur Aufbereitung von Wasser für den Lebensmittelgebrauch nach den vorhergehenden Ansprüchen umfasst ferner die Schritte:
- Verwaltung der verbrauchten Liter Wasser durch ein Nachladesystem zumindest ein virtuelles;
- Verwaltung des Nachladens von Litern gereinigten Wassers mittels eines Systems virtueller Nachfüllungen, wie z.B. eines Telefonaufladungsmodus mittels SMS, MMS oder speziell konfigurierter Anwendungen für Mobiltelefone.

6. Das Verfahren zur Steuerung und Verwaltung eines Anlagensystems (1) für die Reinigung von Wasser für den Lebensmittelgebrauch nach Anspruch 2 umfassend ferner die Schritte:
- Senden eines numerischen oder alphanumerischen Codes zum Freischalten der Anlage an den Kunden, der der Anzahl der verfügbaren Liter entspricht;
- Eingabe des Freischaltcodes durch den Benutzer auf dem Display (11) der Anlage oder durch direkte Kommunikation, z. B. per Bluetooth-Kommunikationsprotokoll zwischen z. B. einem mobilen Gerät und dem Managementsystem der Anlage, das die sichere Nutzung der Anlage gewährleistet.

7. Das Verfahren zur Kontrolle und Verwaltung eines Anlagensystems (1) zur Aufbereitung von Wasser zur alimentären Verwendung gemäß den vorhergehenden Ansprüchen umfassend ferner die Schritte von:
- Filtermanagement und Filterwechsel;
- Sendung direkt an den Wohnsitz des Anwenders des gekauften Filters oder nach Wahl des Anwenders, oder durch Beauftragung eines Technikers;
- Einsetzen des neuen Filters in den Aufbereiter (2);
- Erkennung eines neuen Filters durch die Steuereinheit (9); dieser Filter enthält einen Mikrochip, und die Steuereinheit kann diesen Mikrochip erkennen, dem ein Entsperrungscode oder ein spezielles Erkennungssystem entspricht;
- Eingabe des Freischaltcodes über die bisherigen Modalitäten;
- Reaktivierung der Anlage für den Filterwechsel.

8. Das verfahren zur Kontrolle und Verwaltung eines Anlagensystems (1) zur Aufbereitung von Wasser zur Lebensmittelgebrauch gemäß den vorhergehenden Ansprüchen umfassend ferner die Schritte von:
- Speicherung der noch zur Verfügung stehenden Liter durch die Steuereinheit (9), wenn die Anlage wegen Erschöpfung des Filters gestoppt ist
- Reaktivierung des Systems (1) mit relativen Reaktivierung der Anlage (1) mit relativen Restverbrauchslitern, die durch Ersetzen des Filters wieder verfügbar gemacht werden.

## Revendications

1. Méthode de contrôle et de gestion d'un système d'installation (1) pour la purification de l'eau à usage alimentaire,
dans lequel ledit système d'installation (1) comprend au moins :
- un purificateur d'eau (2) comprenant au moins un filtre pour purifier l'eau, ledit filtre ayant une durée de vie définie représentée par un seuil de tolérance d'usure défini par un nombre de litres consommables (X) pouvant être purifiés avant l' épuisement du filtre ;
- une ligne d'alimentation (3) pour connecter ledit purificateur (2) au réseau d'eau (5) ;
- un robinet (7) connecté à la ligne d'épuration (2) pour distribuer l'eau purifiée;
- une unité de commande (9) ;
- un écran (11) connecté à l'unité de commande (9) ;
- une électrovanne (10) à l'entrée de la ligne d'alimentation (3) commandée par l'unité de commande (9) ;
- un transducteur (6) pour surveiller en continu une variation de pression sur ladite ligne d'alimentation (3) de manière à signaler l'ouverture du robinet (7) ;
- un débitmètre (4) sur la conduite d'alimentation, situé entre l'électrovanne (10) et le purificateur d'eau (2), et connecté à l'unité de commande (9) ;
- un système de communication pour communiquer des données de l'unité de commande (9) à un centre de commande à distance et du centre de commande à distance à l'unité de commande (9) ; ladite méthode comprenant les étapes de :
- préréglage sur l'unité de commande (9) du nombre (X) de litres consommables en eau pouvant être purifiée avant que le filtre ne soit épuisé ;
- surveillance en continu d'une variation de pression sur la ligne d'alimentation(3) au moyen du transducteur (6), qui envoie un signal à l'unité de commande (9) chaque fois que le robinet (7) est ouvert;
- ouverture de l'électrovanne (10) au moyen de l'unité de commande (9) lors de la réception du transducteur (6) le signal de l'ouverture du robinet (7), si des litres consommables sont disponibles ;
- utilisation du débitmètre (4) pour compter le nombre (N) de litres d'eau consommés traversant le purificateur (2) et envoyant ces données à l'unité de contrôle (9) ;
- calcul au moyen de l'unité de commande (9) de la différence (D) entre le nombre préréglé de litres consommables (X) et le nombre de litres consommés (N) à travers le débitmètre (4) ;
- envoi en temps réel des données de l'unité de commande (9) à un écran (11) montrant en temps réel la différence D entre le nombre préréglé de litres consommables (X) et le nombre de litres consommés (N) ;
- à l'épuisement des litres consommables disponibles (X), lorsque la différence D est égale à zéro, génération d'une alarme et fermeture de l'électrovanne (10) au moyen de l'unité de commande (9), fermant ainsi l'alimentation en eau du réseau au système d'installation (1) afin de garantir la qualité optimale de l'eau consommée et donc la santé et la sécurité de l'utilisateur :
Où la méthode comprenant en outre les étapes de :
- transmission en temps réel au centre de commande à distance au moyen du système de communication du nombre (N) de litres consommés :
- fourniture d'une assistance à distance en temps réel depuis le centre de contrôle à distance concernant la maintenance du système d'installation (1) afin de garantir la qualité optimale de l'eau consommée et donc la santé et la sécurité de l'utilisateur.

2. La méthode de commande et de gestion pour un système d'installation (1) pour la purification d'eau à usage alimentaire selon la revendication 1, comprenant en outre les étapes de :
- envoi depuis l'unité de commande (9) vers l'écran (11) des avertissements de pré-alerte indiquant l'expiration de la durée de vie du filtre ;
- envoi depuis l'unité de commande (9) vers l'écran (11) des avertissements de pré-alerte indiquant l'expiration du nombre (X) de litres purifiables par le filtre (F) et/ou l'alerte de l'expiration des conditions d'utilisation du filtre.
- comparaison desdites données ; la durée de vie du filtre peut être épuisée mais pas les litres disponibles et vice versa :
- dans tous les cas, pré-alerte et alerte de fermeture du purificateur lors de l'atteinte d'un ou plusieurs seuils.

3. La méthode de contrôle et de gestion pour un système d'installation (1) pour la purification d'eau à usage alimentaire selon la revendication 1, comprenant en outre les étapes de :
- envoi des données de l'unité de commande (9) pour les anomalies de fonctionnement du système d'installation (1) à au moins un ou plusieurs dispositifs externes, à savoir l'expiration de la durée de vie d'au moins un des filtres du purificateur (2) pour l'expiration de termes et/ou épuisement des litres (F) ;
- gestion / envoi / élaboration au moyen d'un ou plusieurs systèmes de communication externe de gestion des données de l'installation ;
- gestion et élaboration desdites données au moyen d'une unité de commande et de gestion à distance par l'intermédiaire du responsable/fabricant de l'installation.

4. La méthode de contrôle et de gestion pour un système d'installation (1) pour la purification d'eau à usage alimentaire selon la revendication 1, comprenant en outre les étapes de :
- gestion / envoi / traitement desdites données de gestion par un ou plusieurs systèmes de communication avec l'extérieur de l'installation (1), ledit système de communication étant un système de communication intégré Wi-Fi sans fil ou Bluetooth, ou GSM ou GPRS ou UMTS ou 3G ou 4G ou un port USB ou un port Ethernet ou tout autre système approprié pour la communication avec l'extérieur,
- assistance à distance en temps réel pour la sécurité de l'installation et de l'utilisateur.

5. La méthode de contrôle et de gestion pour un système d'installation (1) pour la purification d'eau à usage alimentaire selon la revendication précédente, comprenant en outre les étapes de :
- gestion des litres consommables d'eau au moyen d'un système de recharge au moins virtuel ;
- gestion du rechargement des litres d'eau purifiée au moyen d'un système de recharges virtuelles tel qu'un mode recharge par téléphone au moyen de SMS, MMS, ou des applications pour téléphones mobiles spécialement configurées.

6. La méthode de contrôle et de gestion pour un système d'installation (1) pour la purification d'eau à usage alimentaire selon la revendication 2 , comprenant en outre les étapes de :
- envoi au domicile d'un code numérique ou alphanumérique pour déverrouiller l'installation correspondant au nombre de litres disponibles ;
- saisie par l'utilisateur du code de déverrouillage sur l'écran (11) de l'installation ou au moyen d'une communication directe, par exemple, par protocole de communication Bluetooth entre, par exemple, un appareil mobile et le système de gestion de l'installation garantissant l'utilisation sûre de l'installation.

7. La méthode de contrôle et de gestion pour un système d'installation (1) pour la purification d'eau à usage alimentaire selon la revendication précédente comprenant en outre les étapes de :
- gestion du filtre et remplacement du filtre ;
- envoi directement au domicile de l'utilisateur du filtre acheté, ou au choix de l'utilisateur, envoi d'un technicien ;
- insertion du nouveau filtre dans le purificateur (2) ;
- reconnaissance par l'unité de commande (9) d'un nouveau filtre ; ledit filtre comprenant une micropuce, ladite unité de commande étant adaptée pour reconnaître ladite micropuce à laquelle dite micropuce correspond un code de déverrouillage ou un système de reconnaissance dédié ;
- saisie du code de déverrouillage en utilisant les modalités précédentes ;
- réactivation de l'installation pour le remplacement du filtre.

8. La méthode de contrôle et de gestion pour un système d'installation (1) pour la purification d'eau à usage alimentaire selon la revendication précédente comprenant en outre les étapes de :
- mémorisation par l'unité de commande (9) des litres encore disponibles pour l'utilisateur si l'installation est arrêtée pour épuisement du filtre ;
- réactivation de l'installation (1) avec des litres consommables résiduels correspondants rendus de nouveau disponibles en remplaçant le filtre.
